# EUROPEAN PATENT APPLICATION

(11) **EP 3 594 632 A1**
(43) Date of publication of application: **15.01.2020**
(21) Application number: 19158691.6
(22) Date of filing: 21.02.2019
(51) Int. Cl.: G01D 11/02

(54) **DISPLACEMENT MEASUREMENT MECHANISM FOR AUTOMATED EQUIPMENT**

(30) Priority: 10.07.2018 TW 107123791
(71) Applicant: Fineteck International Ltd., Road Town, Tortola (VG)
(72) Inventor: HUANG, Yi-Hua, Taichung City (TW)
(74) Representative: Lang, Christian

(57) **Abstract**

A displacement measurement mechanism for automated equipment is provided, wherein the automated equipment (100) at least includes an equipment base (10), at least one load-bearing linear slide rail (20) disposed along and parallel to a machining axis (L) of the automated equipment (100), a driving unit (30) parallel to the load-bearing linear slide rail (20), and a sliding table (40) coupled to the load-bearing linear slide rail (20) and the driving unit (30). The displacement measurement mechanism (50) includes a non-load-bearing linear slide rail (53) disposed on the equipment base (100) and adjacent to the machining axis (L), a graduation (51) disposed on the non-load-bearing linear slide rail (53) and parallel to the machining axis (L), a linear slide base (54) slidably coupled to the non-load-bearing linear slide rail (53) and also coupled to the sliding table (40) without bearing the load of the sliding table (40), and a read head (52) coupled to the linear slide base (54) and corresponding to the graduation (51).

## Description

### BACKGROUND OF THE INVENTION

### 1. Technical Field

The present invention relates to a device for measuring displacement and more particularly to a displacement measurement mechanism configured for automated equipment and featuring ease of assembly and disassembly, high measurement accuracy, and low cost.

### 2. Description of Related Art

Linear encoders include optical encoders, magnetic encoders, laser encoders, and so on, though often referred to collectively as optical encoders. Linear encoders are optical, magnetic, or electrical devices working on electromechanical principles mainly to monitor the moving state of an operating mechanism in automated equipment, and to measure the distance travelled by the operating mechanism, in order for the automated equipment to complete a preset operation as scheduled.

When used in automatically controlled equipment (e.g., machine tools), linear encoders can effectively reduce positioning errors attributable to thermal expansion of ball screws, thereby increasing the precision of machining and enhancing workpiece quality. This explains why linear encoders have become a major category of position measurement devices. Generally, existing linear encoders can be mounted in two ways: either externally provided or built-in.

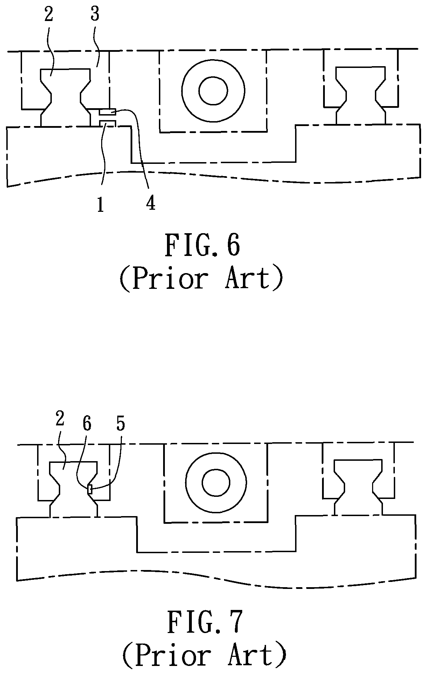

FIG. 6 shows an externally provided linear (e.g., optical) encoder 1 in the prior art. The optical encoder 1 is mounted on a lateral side of a load-bearing linear slide rail 2 of a machine tool. The body of the optical encoder 1 is parallel to the load-bearing linear slide rail 2. A read head 4 is mounted on the corresponding load-bearing slide base 3, is close to and corresponds to the optical encoder 1, and is configured to obtain displacement data when driven to displace with respect to the optical encoder 1 by the load-bearing slide base 3.

Such an externally provided optical encoder 1, however, is vulnerable to grease buildup (which may lead to inaccurate reading) and is easily damaged by external impact. What is worse is that the requirement to keep the optical encoder 1 parallel to the load-bearing linear slide rail 2 and the typically narrow assembly space left on either side of the load-bearing linear slide rail 2 add to the difficulty of mounting and calibrating the optical encoder 1.

To overcome the mounting and calibrating problems of the externally provided optical encoder 1, referring to FIG. 7, a built-in magnetic encoder 5 is provided directly in one of the two lateral slide grooves 6 of a load-bearing linear slide rail 2 of a machine tool to take advantage of the fact that the load-bearing linear slide rail 2 is parallel to the machining axis of interest of the machine tool. While this arrangement makes calibration easier than in the case of the optical encoder 1, the limited height (only about 60 mm) of the slide grooves 6 of a common load-bearing linear slide rail 2 still results in a rather narrow mounting space. Moreover, as the magnetic encoder 5 has a lower resolution than its optical counterpart, and the smaller the magnetic encoder, the lower its resolution, the size of the built-in magnetic encoder 5 cannot be too small (e.g., smaller than 35 mm); otherwise measurement precision will be low. Last but not least, the magnetic encoder 5 is relatively expensive, and the cost of the magnetic encoder 5 increases with its size.

Some common issues with the externally provided optical encoder 1 and the built-in magnetic encoder 5 are low resistance to vibrations, high chances of damage by external impact, and extremely inconvenient maintenance caused by the difficulty of detaching such an encoder when it is damaged or, if the encoder simply cannot be detached, by the trouble of having to disassemble the entire machine on which the encoder is mounted.

The present invention has arisen to mitigate and/or obviate the afore-described disadvantages.

### SUMMARY OF THE INVENTION

The primary aspect of the present invention is to provide a displacement measurement mechanism for automated equipment is mounted at a position close to a machining axis of the automated equipment and includes a non-load-bearing linear slide rail and a linear slide base that are slidably coupled to each other. The non-load-bearing linear slide rail is provided with a graduation, or scale, while the linear slide base is provided with a read head. The linear slide base is designed not to bear the load of the sliding table of the automated equipment. Thus, the displacement measurement mechanism not only allows the graduation to be mounted, dismounted, and calibrated with ease, but also can be detached conveniently.

Furthermore, as the linear slide base does not bear the load of the sliding table, the graduation is not subject to limitations imposed by the sizes of existing linear slide rail products and therefore can be easily mass-produced at low cost.

In addition, the graduation is mounted along (and practically coincides or is colinear with) the machining axis of the automated equipment and hence close to the machining point of the automated equipment, making it possible to achieve the highest machining precision, with exceedingly small machining errors.

To obtain above-mentioned aspects, the present invention provides a displacement measurement mechanism for automated equipment, wherein the automated equipment at least includes an equipment base, at least one load-bearing linear slide rail disposed along and parallel to a machining axis of the automated equipment, a driving unit provided parallel to the load-bearing linear slide rail, and a sliding table coupled to the load-bearing linear slide rail and the driving unit. The displacement measurement mechanism includes a non-load-bearing linear slide rail disposed on the equipment base and adjacent to the machining axis, a graduation disposed on the non-load-bearing linear slide rail and parallel to the machining axis, a linear slide base slidably coupled to the non-load-bearing linear slide rail and also coupled the sliding table without bearing the load of the sliding table, and a read head coupled to the linear slide base and corresponding to the graduation.

In the displacement measurement mechanism of the present invention, the graduation is mounted close to the machining axis to facilitate installation and detachment, to remove limitations in size of the graduation, and to enable cost reduction through mass production of the graduation. The provision of the non-load-bearing linear slide rail makes it even easier to mount the graduation and keep the graduation parallel to the machining axis (i.e., the path of machining); thus, the accuracy of displacement measurement is ensured, and machining errors can be effectively reduced.

### BRIEF DESCRIPTION OF THE DRAWINGS

FIG. 1 is an assembled view of the displacement measurement mechanism for automated equipment according to the first preferred embodiment of the present invention.
FIG. 2 schematically shows how the read head in FIG. 1 is disposed on the linear slide base via the fixing member.
FIG. 3 is similar to FIG. 1 but shows the displacement measurement mechanism mounted slightly off the machining axis.
FIG. 4 is an assembled view of the displacement measurement mechanism for automated equipment according to the second preferred embodiment of the invention.
FIG. 5 schematically shows the displacement measurement mechanism according to another embodiment of the invention, wherein the displacement measurement mechanism is applied to a rotating bearing.
FIG. 6 schematically shows an existing optical encoder mounted on a load-bearing linear slide rail.
FIG. 7 schematically shows an existing magnetic encoder mounted on a load-bearing linear slide rail.

### DETAILED DESCRIPTION OF THE PREFERRED EMBODIMENTS

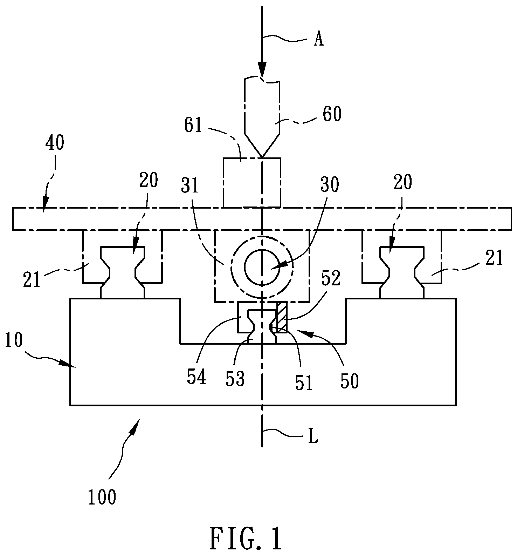

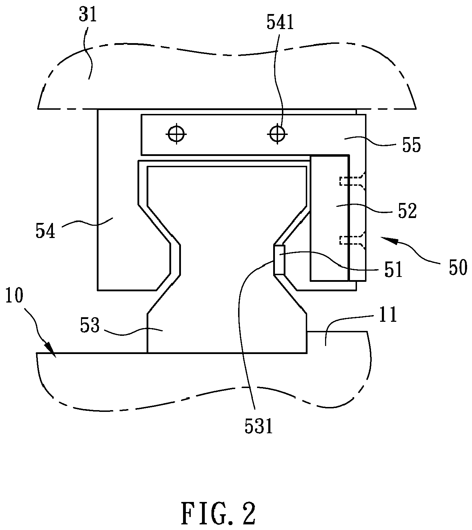

Referring to FIG. 1 and FIG. 2 for the displacement measurement mechanism 50 for use in a piece of automated equipment 100 according to the first preferred embodiment of the present invention, the automated equipment 100 at least includes an equipment base 10, two load-bearing linear slide rails 20 disposed along and parallel to a machining axis L of the automated equipment 100, a driving unit 30 provided parallel to the load-bearing linear slide rails 20, and a sliding table 40 coupled to the load-bearing linear slide rails 20 and the driving unit 30. Each load-bearing linear slide rail 20 is connected to the sliding table 40 through a slide base 21, and the driving unit 30 is connected to the sliding table 40 through a slide base 31, in order for the sliding table 40 to slide on the load-bearing linear slide rails 20 and the driving unit 30, or more specifically to move linearly leftward or rightward, via the slide bases 21 and 31. The driving unit 30 may be a ball screw, a rack and pinion assembly, or a linear motor, and in this embodiment is a ball screw by way of example.

The present invention is characterized in that the displacement measurement mechanism 50 includes a graduation (commonly referred to as a scale) 51, a read head 52, a non-load-bearing linear slide rail 53, and a linear slide base 54.

The non-load-bearing linear slide rail 53 is disposed on the equipment base 10 and is adjacent to the machining axis L.

The graduation 51 is disposed on the non-load-bearing linear slide rail 53, is parallel and adjacent to the machining axis L, and is close to the driving unit 30. In this embodiment, the graduation 51 and the read head 52 make up a linear encoder, which may be a magnetic encoder, an optical encoder, a laser encoder, or the like. Since magnetic encoders are advantageously resistant to grease buildup and other contaminants, the graduation 51 in the present invention preferably constitutes a magnetic encoder.

The linear slide base 54 is slidably coupled to the non-load-bearing linear slide rail 53, is coupled to the sliding table 40, but does not bear the load of the sliding table 40.

The read head 52 is coupled to the linear slide base 54 and corresponds to the graduation 51. The read head 52 in this embodiment is a decoder for decoding the positional data of the graduation 51. The decoded data is then subjected to operation by a control center (not shown) in order for the control center to move the sliding table 40 leftward or rightward. The control center is not a major technical feature of the present invention and therefore will not be described in more detail.

The displacement measurement mechanism 50 further includes a fixing member 55. The linear slide base 54 is coupled to the slide base 31, the fixing member 55 is disposed on the linear slide base 54 and coupled to the driving unit 30, and the read head 52 is disposed on the fixing member 55. In practice, the non-load-bearing linear slide rail 53 may be incorporated with the equipment base 10 during manufacture of the equipment base 10. The graduation 51 is disposed on the rail 531 on one lateral side of the non-load-bearing linear slide rail 53 so that the read head 52, which is mounted on the fixing member 55, can be displaced with respect to the graduation 51 by the fixing member 55 and obtain the corresponding displacement data when the slide base 31 moves the linear slide base 54 and thereby displaces the fixing member 55 simultaneously.

In practice, referring to FIG. 2, the equipment base 10 of the automated equipment further has a reference platform 11 parallel to the load-bearing linear slide rails 20 in FIG. 1. When installing the displacement measurement mechanism 50, the non-load-bearing linear slide rail 53 is so placed as to abut against the reference platform 11, in order for the non-load-bearing linear slide rail 53 to be parallel to the load-bearing linear slide rails 20. Thus, without need for calibration, the graduation 51 on the non-load-bearing linear slide rail 53 is brought into parallel alignment with the machining point A of a machining tool (e.g., a cutter) 60 (see FIG. 1), meaning rapid and precise assembly can be achieved without the inconvenience of an additional calibration process.

In this embodiment, the displacement measurement mechanism 50 is applicable to each machining axis of the automated equipment 100. For example, the displacement measurement mechanism 50 can be installed on one side of and adjacent to the driving unit (e.g., a ball screw) corresponding to each of the X, Y, and Z axes.

As the graduation 51 of the displacement measurement mechanism 50 is mounted in the vicinity of the driving unit 30, the relatively large space around the driving unit 30 not only makes it easier to mount and dismount the graduation 51, but also allows graduations 51 of various sizes to be mounted without limitation. The graduation 51, therefore, is subject to no limitation in size and can be mass-produced to lower production cost and be applied to different types of automated equipment (e.g., machine tools).

Besides, when considering the error factors of precision machine designs, the Abbe error must be taken into account in addition to issues associated with the manufacture of optical or magnetic encoders (or scales). The Abbe error can be expressed by the equation: Abbe error = S*sin θ, where S is the distance between the axis of linear movement and the axis of a scale, and θ is the angular error between the axis of cutting and the axis of the scale. It can be known from the equation that the greater the value of S, the larger the error.

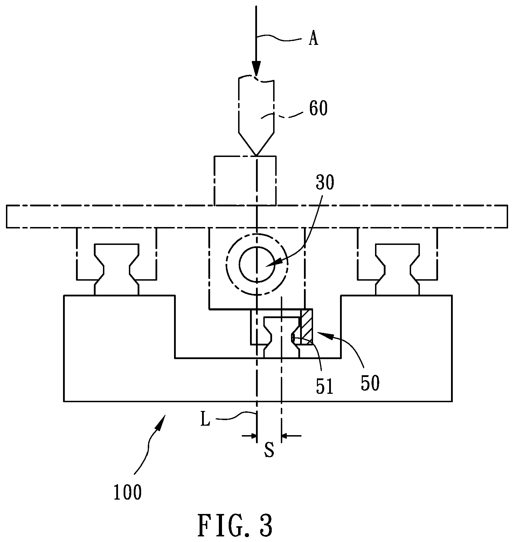

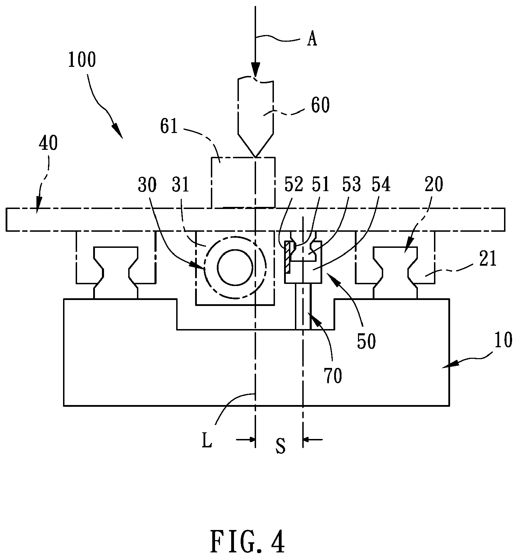

Since the machining point A, at which the machining tool 60 of the automated equipment 100 machines a workpiece 61, coincides, and is therefore colinear, with the machining axis L, and the graduation 51 is mounted at a position either lying on the machining axis L (see FIG. 1) or adjacent to the machining axis L (see FIG. 3 or FIG. 4), the angular error between the machining point A and the graduation 51 is or approaches zero. Also, the distance S between the graduation 51 and the driving unit 30 is fairly short, preferably equal to zero (as shown in FIG. 1) or almost zero (as shown in FIG. 3 or FIG. 4). Consequently, the Abbe error of the displacement measurement mechanism 50 is very small, if not negligible, and this helps enhance the machining precision of the automated equipment.

FIG. 4 shows the displacement measurement mechanism 50 for a piece of automated equipment 100 according to the second preferred embodiment of the present invention. The automated equipment 100 at least includes an equipment base 10, two load-bearing linear slide rails 20 disposed along and parallel to a machining axis L of the automated equipment 100 (and hence close to the machining point A of the automated equipment 100), a driving unit 30 provided parallel to the load-bearing linear slide rails 20, and a sliding table 40 coupled to the load-bearing linear slide rails 20 and the driving unit 30. Each load-bearing linear slide rail 20 is connected to the sliding table 40 through a slide base 21, and the driving unit 30 is connected to the sliding table 40 through a slide base 31, allowing the sliding table 40 to be slid on the load-bearing linear slide rails 20 and the driving unit 30, or more specifically be moved linearly leftward or rightward, via the slide bases 21 and 31. The driving unit 30 may be a ball screw, a rack and pinion assembly, or a linear motor, and in this embodiment is a ball screw by way of example.

In the second embodiment, the displacement measurement mechanism 50 includes a graduation 51, a read head 52, a non-load-bearing linear slide rail 53 provided on the sliding table 40, and a linear slide base 54 coupled to the equipment base 10. The graduation 51 is disposed on the non-load-bearing linear slide rail 53 and thereby coupled to the sliding table 40 and is parallel and adjacent to the machining axis L. The read head 52 is fixed on the linear slide base 54 and thereby coupled to the equipment base 10 and corresponds to the graduation 51. This embodiment further includes a fixing member 70. The fixing member 70 is disposed on the equipment base 10 and is close to the driving unit 30. The read head 52 is disposed on the fixing member 70 and is close to and corresponds to the graduation 51. Once the graduation 51 is brought close to the machining axis L in a parallel manner and then coupled to the sliding table 40, and the read head 52 is coupled to the equipment base 10 through the support of the fixing member 70 and is close to the graduation 51, the sliding table 40 can drive the graduation 51 into displacement with respect to the read head 52, in order for the read head 52 to obtain the corresponding displacement data. Thus, the displacement measurement mechanism in the second embodiment produces the same effect as its counterpart in the first embodiment.

According to the above, the displacement measurement mechanism 50 of the present invention dispenses with the conventional arrangement of having an optical (or magnetic) encoder positioned on a load-bearing linear slide rail. Instead, the encoder in the present invention is mounted on an equipment base through a small and independent slide rail, i.e., the non-load-bearing linear slide rail 53, which is not used to support the sliding table 40 but serves only as a scale of displacement. The graduation 51, therefore, is not subject to limitations imposed by the cross-sectional shapes and sizes of existing load-bearing linear slide rails. This allows an assembly worker to mount the displacement measurement mechanism 50 in a way that suits the actual assembly space so that assembly, disassembly, and maintenance of the displacement measurement mechanism 50 are made easy. Furthermore, the displacement measurement mechanism 50 of the present invention makes use of existing small slide rails and is suitable for mass production and hence contributable to cost reduction. Also, the non-load-bearing linear slide rail 53 allows the graduation 51 to be mounted with ease and stay parallel to the machining axis L (i.e., the machining path), thereby ensuring the accuracy of displacement measurement and reducing machining errors effectively.

In addition, referring to FIG. 2, the slide base 31 of common automated equipment is typically provided with a plurality of locking points 541 for locking purposes. The existing locking points 541 can be used to connect with the fixing member 55 and thereby dispose the read head 52 on the fixing member 55 at a position corresponding to the graduation 51. This arrangement not only adds to the ease of assembly, but also prevents erroneous assembly so that the accuracy of assembly can be increased.

Lastly, to solve the aforementioned mounting problems of existing optical or magnetic encoders, the displacement measurement mechanism 50 of the present invention is mounted close to the driving unit 30 to facilitate wiring, assembly, and disassembly, and is disposed beside or below the driving unit 30 in order to be protected from dust and grease and from being directly affected by vibrations of the heavily loaded linear slide rails and their components.

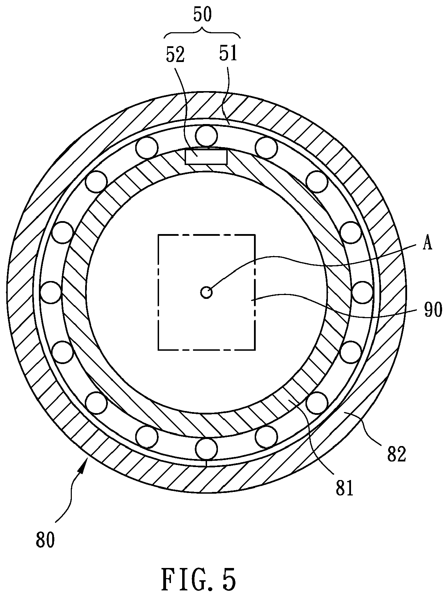

It is worth mentioning that, although the displacement measurement mechanisms 50 disclosed in FIG. 1 to FIG. 4 are configured and mounted for linear movement, the displacement measurement mechanism of the present invention is equally applicable to automated equipment that involves rotary movement. In FIG. 5, for example, the read head 52 is mounted on the inner ring 81 of a rotating bearing 80 while the graduation 51 is mounted on the outer ring 82. It is also feasible for the read head 52 and the graduation 51 to swap positions, though. In either case, the read head 52 can obtain rotary displacement data with respect to the graduation 51 when a machining tool 90 is rotated about the machining point A.

## Claims

1. A displacement measurement mechanism for automated equipment, wherein the automated equipment (100) comprises an equipment base (10), at least one load-bearing linear slide rail (20) disposed along and parallel to a machining axis (L) of the automated equipment (100), a driving unit (30) provided parallel to the load-bearing linear slide rail (20), and a sliding table (40) coupled to the load-bearing linear slide rail (20) and the driving unit (30);
**characterized in that**
the displacement measurement mechanism (50) comprising:
a non-load-bearing linear slide rail (53) disposed on the equipment base (10) and adjacent to the machining axis (L);
a graduation (51) disposed on the non-load-bearing linear slide rail (53) and parallel to the machining axis (L);
a linear slide base (54) slidably coupled to the non-load-bearing linear slide rail (53) and coupled to the sliding table (40) without bearing a load of the sliding table (40); and
a read head (52) coupled to the linear slide base (54) and corresponding to the graduation (51).

2. The displacement measurement mechanism for the automated equipment as claimed in claim 1, further comprising a fixing member (55), wherein the driving unit (30) is connected to the sliding table (40) through a slide base (31), the linear slide base (54) is fixed on the slide base (31), the fixing member (55) is disposed on the linear slide base (54) and is close to the driving unit (30), the read head (52) is disposed on the fixing member (55), and the slide base (31) is able to drive the linear slide base (54) and thereby simultaneously displace the fixing member (55), and hence the read head (52), so that the read head (52) is displaced with respect to the graduation (51) to obtain displacement data.

3. The displacement measurement mechanism for the automated equipment as claimed in claim 1, wherein the graduation (51) is close to the driving unit (30) and is adjacent to the machining axis (L).

4. The displacement measurement mechanism for the automated equipment as claimed in claim 1, wherein the graduation (51) is mounted at a position axially aligned with the machining axis (L) of the automated equipment (100).

5. The displacement measurement mechanism for the automated equipment as claimed in claim 1, wherein the equipment base (10) is further provided with a reference platform (11), the reference platform (11) is parallel to the load-bearing linear slide rail (20), and the non-load-bearing linear slide rail (53) abuts against the reference platform (11) and is therefore parallel to the load-bearing linear slide rail (20).

6. The displacement measurement mechanism for the automated equipment as claimed in claim 1, wherein the graduation (51) and the read head (52) constitute a linear encoder, and the linear encoder is one of a magnetic encoder, an optical encoder, and a laser encoder.

7. The displacement measurement mechanism for the automated equipment as claimed in claim 1, wherein the driving unit (30) is one of a ball screw, a rack and pinion assembly, and a linear motor.

8. A displacement measurement mechanism for automated equipment, wherein the automated equipment (100) comprises an equipment base (10), at least one load-bearing linear slide rail (20) disposed along and parallel to a machining axis (L) of the automated equipment (100), a driving unit (30) provided parallel to the load-bearing linear slide rail (20), and a sliding table (40) coupled to the load-bearing linear slide rail (20) and the driving unit (30);
**characterized in that**
the displacement measurement mechanism (50) comprising:
a non-load-bearing linear slide rail (53) disposed on the sliding table (40) without bearing a load of the sliding table (40), and adjacent to the machining axis (L);
a graduation (51) disposed on the non-load-bearing linear slide rail (53) and parallel to the machining axis (L);
a linear slide base (54) disposed between the equipment base (10) and the non-load-bearing linear slide rail (53) such that the non-load-bearing linear slide rail (53) is slidably coupled to the linear slide base (54); and
a read head (52) coupled to the linear slide base (54) and corresponding to the graduation (51).

9. The displacement measurement mechanism for the automated equipment as claimed in claim 8, further comprising a fixing member (70), wherein the fixing member (70) is disposed on the linear slide base (54) and is close to the driving unit (30), and the read head (52) is disposed on the fixing member (70) and is close to and corresponds to the graduation (51).

10. The displacement measurement mechanism for the automated equipment as claimed in claim 8, wherein the graduation (51) is close to the driving unit (30) and is adjacent to the machining axis (L).

11. The displacement measurement mechanism for the automated equipment as claimed in claim 8, wherein the graduation (51) and the read head (52) constitute a linear encoder, and the linear encoder is one of a magnetic encoder, an optical encoder, and a laser encoder.

12. The displacement measurement mechanism for the automated equipment as claimed in claim 8, wherein the driving unit (30) is one of a ball screw, a rack and pinion assembly, and a linear motor.
